# FASCICULE DE BREVET EUROPEEN

(11) **EP 1 578 845 B1**
(45) Date de publication et mention de la délivrance du brevet: **22.10.2008**
(21) Numéro de dépôt: 03815085.0
(22) Date de dépôt: 08.12.2003
(51) Int. Cl.: C08G 77/06, C08G 77/16, B01J 19/18

(54) **PROCEDE D'HYDROLYSE/CONDENSATION D'HALOGENOSILANES POUR SYNTHETISER DES POLYORGANOSILOXANES HYDROXYLES, DISPOSITIF POUR LA MISE EN OEUVRE DE CE PROCEDE.**
VERFAHREN ZUR HYDROLYSE/KONDENSATION VON HALOGENSILANEN ZUR SYNTHESE VON HYDROXYLPOLYORGANOSILOXANEN UND VORRICHTUNG DAFÜR
METHOD FOR HYDROLYZING/CONDENSING HALOGENOSILANES FOR SYNTHESIZING HYDROXYL POLYORGANOSILOXANES, DEVICE THEREFOR

(30) Priorité: 16.12.2002 FR 0215944
(43) Date de publication de la demande: 28.09.2005
(73) Titulaire: Bluestar Silicones France, 69486 Lyon (FR)
(72) Inventeur: DEFORTH, Thomas, F-69007 LYON (FR); M. RAMDANI, Kamel, 69420 TUPIN ET SEMONS (FR)
(86) Numéro de dépôt international: PCT/FR2003/003615
(87) Numéro de publication internationale: WO 2004/063251

(56) Documents cités:
- WO-A-99/05202
- US-A- 4 609 752
- US-B1- 6 281 285

## Description

Le domaine de l'invention est celui de la synthèse de polyorganosiloxanes hydroxylés en particulier de polydiorganosiloxanes linéaires à terminaisons silanol (≡SiOH) de masse molaire peu élevée. Ces silicones (e.g. polydiméthylsiloxane α,ω-diOH) peuvent notamment être utilisés comme dispersants dans le cadre de la fabrication d'élastomères silicones, tels que l'on en trouve notamment dans les revêtements silicones réticulés (e.g. anti-adhérence papier) ou bien dans les émulsions silicones réticulables à température ambiante (polycondensation) pour former des mastics ou autres matériaux d'étanchéité.

La présente invention concerne ainsi un procédé d'hydrolyse/condensation d'halogénosilanes dans un milieu réactionnel polyphasique (de préférence biphasique), ce procédé étant du type de ceux consistant à mettre les halogénosilanes en présence d'eau et de tampon, sous agitation, puis à séparer la phase aqueuse de la phase organique, laquelle comprend les produits d'hydrolyse/condensation, à savoir des polyorganosiloxanes hydroxylés.

La présente invention vise également un dispositif pour la mise en oeuvre de ce procédé d'hydrolyse/condensation d'halogénosilanes.

Comme cela est indiqué dans la littérature scientifique et technique par exemple dans l'ouvrage NOLL " Chemistry and technology of silicone " (Ed. Academic Press 1968), il existe deux voies bien connues pour la synthèse de polydiorganosiloxanes dont les extrémités sont porteuses de motifs SiOH :
-1- ouverture de cycles de polyorganosiloxanes cycliques octaméthyltétrasiloxane (D₄) ou heptaméthyltrisiloxane (D₃) et/ou redistribution de motifs siloxy D₂ : -R₂SiO-O_{2/2}, catalysée par des acides ou des bases ;
-2- hydrolyse de motifs ≡SiZ (Z = halogène ou alkyle) dans une phase aqueuse, puis condensation.

Généralement, les huiles longues à extrémités silanol (taux de ≡SiOH (p/p) faible, c'est-à-dire < 1 %) sont fabriquées industriellement par redistribution de chaînes courtes à partir de polyorganosiloxanes cycliques de type D₃ et ou D₄.

Les huiles courtes à forte concentration en ≡SiOH sont classiquement obtenues par hydrolyse/condensation de silanes à motifs ≡SiZ (Z = halogène ou alkyle) dans un milieu biphasique, organique/aqueux.

La présente invention s'inscrit plus spécialement dans la technologie d'hydrolyse/condensation d'halogénosilanes, par exemple de chlorosilanes.

Cette technologie est connue depuis des lustres.

A titre d'illustration, on peut citer le brevet américain US-B-2 661 348 qui divulgue un procédé de préparation d'une résine polysiloxanique consistant à mettre en oeuvre une solution comprenant un organotrihalogénosilane (trichlorométhylsilane) dans un solvant organique halogéné inerte (trichloréthylène, tétrachloroéthane, tétrachloroéthylène...). Cette solution organique d'halogénosilanes est mise en présence d'eau, en quantité suffisante pour permettre l'hydrolyse complète de l'organotrihalogénosilane, pour enfin extraire la phase organique non aqueuse contenant la résine polysiloxanique.
Ce procédé est censé permettre la résolution d'un problème technique récurrent lors de l'hydrolyse/condensation d'halogéno-silanes, à savoir qu'avec des polyorganosiloxanes substitués par des alkyles inférieurs (méthyle), l'hydrolyse et la condensation interviennent de façon simultanée. Il en résulte une polycondensation incontrôlée, qui conduit à la formation d'espèces polysiloxaniques linéaires longues ainsi que d'espèces polysiloxaniques cycliques. Il apparaît ainsi dans le milieu réactionnel des gels silicones insolubles qui rendent les produits silicones obtenus par hydrolyse/condensation d'halogénosilanes, impropres à toute utilisation ultérieure dans une quelconque application industrielle et commerciale. Le fait de mettre en oeuvre un solvant organique inerte comme proposé dans l'US-B-2 661 348 permet une meilleure solubilisation du produit silicone hydrolysé dans la phase organique, tandis que l'acide (HCl) promoteur de l'hydrolyse ainsi que tous les produits hydrophiles restent dans la phase aqueuse. On parvient ainsi plus ou moins à éviter l'emballement de la réaction. En outre, le choix d'un solvant d'une densité supérieure à 1,1 (solvant halogéné) favorise et facilite la séparation des deux phases sans formation d'une émulsion huile dans eau.
Selon ce brevet US-B-2 661 348, le réacteur est équipé d'un agitateur, mais les paramètres d'agitation ne sont pas présentés comme critiques.

Comme indiqué ci-dessus, les produits de départ de l'hydrolyse/condensation peuvent être des alcoxysilanes en lieu et place des halogénosilanes. Ainsi, la demande de brevet EP-A-1 052 262 décrit l'hydrolyse/condensation d'une mole de diméthoxydiméthylsilane par deux moles d'eau, le milieu réactionnel étant ajusté à pH 3,4 à l'aide d'acide chlorhydrique. Ce système biphasique stoechiométrique est agité vigoureusement à température ambiante. L'agitation se poursuit pendant un certain temps. Le mélange réactionnel devient homogène et on lui adjoint ensuite un système tampon KH₂PO₄/Na₂HPO₄ de façon à régler le pH à 6,8. Après quelques minutes d'agitation, le milieu réactionnel est soumis à une opération de distillation sous vide pour éliminer l'eau et les substances volatiles (méthanol).
Il ressort de ce document que les polyorganosiloxanes hydroxylés obtenus, ont des degrés de polymérisation qui sont légèrement supérieurs à 2 et qui ont tendance à croître au stockage (instabilité).
En outre, ce document ne met pas particulièrement en exergue les conditions d'agitation, pas plus que le rapport silane/phase aqueuse, au regard des performances attendues pour le procédé d'hydrolyse/condensation considéré.
En vérité, le procédé selon l'EP-A-1 052 262 ne garantit pas un bon contrôle de la réaction d'hydrolyse/condensation de silanes à motifs hydrolysables (≡Si-halogène, ≡Si-alcoxy ou ≡Si-OH).
Enfin, ce procédé n'est pas des plus économiques et a également pour inconvénient d'être écotoxique.

Dans ce contexte, l'un des objectifs essentiels de la présente invention est de proposer un procédé d'hydrolyse/condensation de silanes halogénés alcoxylés ou hydroxylés, dans lequel la cinétique réactionnelle d'hydrolyse et de condensation soit parfaitement sous contrôle, de manière à pouvoir maîtriser ce faisant la longueur de la chaîne silicone.

Un autre objectif essentiel de la présente invention est de fournir un procédé économique et simple d'hydrolyse/condensation de silanes et en particulier d'halogénosilanes, permettant de produire des polyorganosiloxanes hydroxylés, à chaîne courte et donc à taux d'OH supérieur à 2 %, tout en bénéficiant d'une excellente stabilité au stockage.

Un autre objectif essentiel de la présente invention est de fournir un procédé d'hydrolyse/condensation de silanes et en particulier d'halogénosilanes, satisfaisant à tous les impératifs "d'applicabilité industrielle", à savoir notamment disponibilité, accessibilité et faible coût des produits des produits de départ, facilité de mise en oeuvre, faible coût de revient, absence de dangerosité et d'écotoxicité (pas de solvants organiques), rapidité, possibilité de fonctionnement en continu, entre autres.

Un autre objectif essentiel de la présente invention est de fournir un procédé de synthèse de polyorganosiloxanes hydroxylés, en particulier à leurs extrémités, caractérisés par un taux d'OH supérieur ou égal à 2 %, de préférence supérieur ou égal à 5 %, et plus préférentiellement encore supérieur ou égal à 10 %.

Un autre objectif essentiel de la présente invention est de fournir un procédé d'hydrolyse/condensation de silanes et en particulier d'halogénosilanes, dans lequel la séparation entre la phase organique comportant les produits finis (POS hydroxylés) et la phase aqueuse comportant les réactifs (catalyseur acide/eau/tampon) soit aisée à effectuer.

Un autre objectif essentiel de la présente invention est de fournir un dispositif simple, économique et performant pour la mise en oeuvre du procédé susvisé.

Ces objectifs, parmi d'autres, sont atteints par la présente invention qui concerne tout d'abord un procédé d'hydrolyse/condensation, par catalyse acide, de silanes porteurs groupements hydrolysables -de préférence des halogénosilanes et plus préférentiellement encore des chlorosilanes- dans un milieu réactionnel polyphasique (de préférence biphasique), ce procédé étant du type de ceux consistant à mettre les silanes porteurs de groupements hydrolysables en présence d'eau et de tampon, sous agitation, puis à séparer la phase aqueuse de la phase organique, laquelle comprend les produits de l'hydrolyse/condensation, à savoir des polyorganosiloxanes hydroxylés;
caractérisé en ce que :
-a- on met en oeuvre des moyens d'agitation intensive aptes à produire, dans le milieu réactionnel, une agitation au moins équivalente à celle induite par un cisaillement correspondant à celui fourni par un rotor dont la vitesse périphérique est au moins égale à 8 m.s⁻¹, de préférence à 10 m.s⁻¹, et plus préférentiellement encore comprise entre 15 et 30 m.s⁻¹, et ainsi permettre la formation de gouttelettes de phase organique, de d₃₂ inférieur à 500 µm ;
-b- et on fait en sorte que la fraction massique silanes/phase aqueuse soit supérieure ou égale à 0,05, de préférence supérieure ou égale à 0,10, et plus préférentiellement encore comprise entre 0,50 et 2,00 .

Il est du mérite des inventeurs d'avoir mis en évidence l'importance des paramètres opérationnels que sont :
-a- l'agitation dans le système biphasique d'hydrolyse/condensation, et
-b- la dilution de la phase organique dans la phase aqueuse dudit milieu réactionnel.

Le procédé selon l'invention permet la fabrication de PolyOrganoSiloxanes (POS) hydroxylés et en particulier de polydialkyl(e.g.méthyl)siloxanes α,ω-OH, en maîtrisant complètement le taux de motifs ≡SiOH, par exemple de 0,5 à 18 % en poids, en jouant sur les paramètres -a- et -b- rappelés ci-dessus, ce qui donne accès à des POS α,ω-OH très courts, comme par exemple le M^{OH}DₙM^{OH} (n = 2 à 4), jusqu'alors très difficiles à obtenir et à stabiliser.

Outre les POS α,ω-OH linéaires, le procédé selon l'invention conduit également à des composés cycliques en quantités limitées.

Le procédé selon l'invention fait intervenir une réaction biphasique liquide/liquide entre une phase organique chargée en silanes hydrolysables et une phase aqueuse (de préférence basique) chargée en sel.

Expérimentalement, la taille d'une émulsion est représentée par une distribution de tailles. Le diamètre moyen des gouttes dans une dispersion est généralement donné par le diamètre moyen de Sauter, d₃₂. La valeur du diamètre de Sauter résulte de l'équilibre entre les phénomènes de rupture, liés à la turbulence locale au voisinage du mobile d'agitation, et les phénomènes de coalescence dans les zones périphériques de turbulence et cisaillement moyen. Le diamètre moyen de Sauter est souvent pris proportionnel au diamètre maximum stable [Zhou et Kresta, 1998, Chemical Engineering Science, vol.53, n° 11].

Conformément à l'une des caractéristiques essentielles de l'invention, la conduite d'une agitation a- suffisante en termes de puissance dissipée locale et en termes de cisaillement, détermine les conditions ad hoc de micromélange et donc in fine la formation des gouttelettes de phase organique dispersée, qui ont une taille assez réduite pour permettre la maîtrise de la réaction.

Le facteur -b- de dilution suffisamment forte de la phase organique dispersée dans la phase aqueuse permet de limiter de manière tout à fait significative le risque de coalescence des gouttelettes et donc de contrôler le taux d'OH par la longueur des chaînes siloxaniques.

Suivant une caractéristique préférée du procédé selon l'invention, le neutralisant comprend au moins une base, choisie de préférence parmi celles de formule : ROH avec R représentant une espèce ionique issue d'un élément appartenant à la famille des alcalins - colonne IA de la classification périodique-, et plus préférentiellement encore dans le groupe comprenant : NaOH, LiOH et CsOH.

Suivant une autre caractéristique préférée du procédé selon l'invention, le tampon est à base de carbonates et/ou de phosphates et/ou de borates et/ou de nitrates, entre autres. De préférence, ce tampon se forme in situ dans le milieu réactionnel après introduction dans ce dernier d'au moins un carbonate et/ou un phosphate et/ou un borate et/ou un nitrate, avantageusement un carbonate et/ou un phosphate et/ou un borate et/ou un nitrate de métal alcalin -colonne IA de la classification périodique-, et plus avantageusement encore un carbonate issu du groupe comprenant: Na₂CO₃, Li₂CO₃ et Cs₂CO₃.

Le neutralisant constitué par une solution aqueuse de la base NaOH et le tampon obtenu in situ par introduction de Na₂CO₃ dans le milieu réactionnel, sont des formes de mise en oeuvre privilégiées en pratique.

Le neutralisant et le tampon permettent de maîtriser la polycondensation, au travers du contrôle de l'acidité, laquelle joue en l'occurrence le rôle de catalyseur. Ainsi, conformément au procédé suivant l'invention, on fait en sorte que le pH du milieu réactionnel soit stabilisé entre 7 et 12, de préférence entre 9 et 11.

Afin d'améliorer la séparation de la phase aqueuse et de la phase organique, il est apparu tout à fait opportun, conformément à l'invention, de faire en sorte que la phase aqueuse ait une concentration saline telle que sa densité soit supérieure à 1.

S'agissant de la nature des produits de départ mis en oeuvre, il peut être précisé de manière générale que les silanes de départ sont de préférence choisis parmi les espèces de formules suivantes:
Monosilanes :

   (I) (X)ₐ (R)₄₋ₐ Si
Polysilanes : 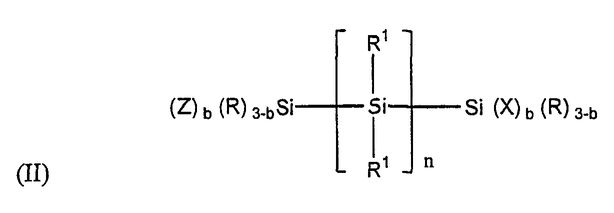 dans lesquelles :
   ∼ Z représente indépendamment un groupement hydrolysable, de préférence choisi dans le groupe comprenant : les halogènes; les radicaux OR', et OH; les halogènes étant tout spécialement privilégiés ;
   ∼ R, R¹, R' représente indépendamment un radical alkyle, un cycloalkyle, un aryle, un arylalkyle, un acyle, un alcényle, un alcynyle ;
   ∼ a, b, n sont des entiers positifs, a = 1-4, b = 1-3, n= 1-100.

Par "alkyle", on désigne une chaîne hydrocarbonée saturée, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 7 atomes de carbone.
Des exemples de groupes alkyle sont notamment méthyle, éthyle, isopropyle, n-propyle, tert-butyle, isobutyle, n-butyle, n-pentyle, isoamyle et 1,1-diméthylpropyle.

Par "cycloalkyle", on entend un radical hydrocarboné saturé mono- ou polycyclique, de préférence mono- ou bicyclique, présentant préférablement de 3 à 10 atomes de carbone, mieux encore de 3 à 8. Par radical "hydrocarboné saturé polycyclique", on entend un radical présentant deux ou plusieurs noyaux cycliques rattachés les uns aux autres par des liaisons σ ou/et condensés deux à deux. Des exemples de groupes cycloalkyle polycycliques sont adamantane et norbornane. Des exemples de groupes cycloalkyle monocycliques sont : cyclopropyle, cyclobutyle, cyclopentyle, cyclohexyle, cycloheptyle et cyclooctyle.

L'expression "aryle" désigne un groupe hydrocarboné aromatique, ayant de 6 à 18 atomes de carbone, monocyclique ou polycyclique et de préférence monocyclique ou bicyclique. Il doit être entendu que, dans le cadre de l'invention, par radical aromatique polycyclique, on entend un radical présentant deux ou plusieurs noyaux aromatiques, condensés (orthocondensés ou ortho et péricondensés) les uns aux autres, c'est-à-dire présentant, deux à deux, au moins deux carbones en commun. Ledit groupe hydrocarboné aromatique ("aryle") est éventuellement substitué par exemple par un ou plusieurs alkyles en C₁-C₃, un ou plusieurs radicaux hydrocarbonés halogénés (e.g. CF₃), un ou plusieurs alcoxy (e.g. CH₃O) ou un ou plusieurs radicaux hydrocarbonés comprenant un ou plusieurs motifs cétone (e.g. CH₃CO-).
A titre d'exemple d'aryle, on peut mentionner les radicaux phényle, naphtyle, anthryle et phénanthryle.

L'expression "arylalkyle" désigne un groupe alkyle tel que défini ci-dessus, substitué par un ou plusieurs groupes aryle sur sa chaîne hydrocarbonée, le groupe aryle étant tel que défini ci-dessus. Des exemples en sont benzyle et triphénylméthyle.

Par acyle, on entend un groupe R°-CO- où R° représente un alkyle tel que défini ci-dessus ; ou bien un groupe Ar-CO- où Ar représente un groupe aryle tel que défini ci-dessus, ou bien un arylalkyle dans lequel "aryle" et "alkyle" sont tels que définis ci-dessus et dans lequel la partie aryle est éventuellement substituée e.g. par un alkyle.

Par alcényle, on entend une chaîne hydrocarbonée insaturée, linéaire ou ramifiée, substituée ou non, présentant au moins une double liaison oléfinique, et plus préférablement une seule double liaison. De préférence, le groupe alcényle présente de 2 à 8 atomes de carbone, mieux encore de 2 à 6. Cette chaîne hydrocarbonée comprend éventuellement au moins un hétéroatome tel que O, N, S.
Des exemples préférés de groupes alcényle sont les groupes vinyle, allyle et homoallyle.

Par "alcynyle", on entend selon l'invention, une chaîne hydrocarbonée insaturée, linéaire ou ramifiée, substituée ou non, présentant au moins une triple liaison acétylénique, et plus préférablement une seule triple liaison. De préférence, le groupe alcynyle présente de 2 à 8 atomes de carbone, mieux encore de 2 à 6 atomes de carbone. A titre d'exemple, on peut citer le groupe acétylényle, ainsi que le groupe propargyle. Cette chaîne hydrocarbonée comprend éventuellement au moins un hétéroatome tel que O, N, S.

De manière plus préférée encore, X = halogène, par exemple chlore.
Dans cette dernière hypothèse, l'hydrolyse génère un halogénoacide, en l'occurrence HCl qui catalyse la condensation et qui donc doit être neutralisée à des fins de contrôle de cette dernière.

Avantageusement, le rapport molaire entre l'acide généré par le silane et le neutralisant constitué par la base, est, dans ce mode préféré de mise en oeuvre, égal à 1.

Il est préférable que la température appliquée pour l'hydrolyse/condensation soit une température de consigne T, telle que:
~ T ≤ 90°C,
∼ de préférence T ≤ 80°C,
∼ et plus préférentiellement encore 20°C ≤ T ≤ 60°C.

Les conditions de pression convenables pour le procédé selon l'invention sont les conditions de pression atmosphérique normale.

Suivant l'invention, on laisse la réaction d'hydrolyse/condensation conduit à des polyorganosiloxanes hydroxylés ayant un taux d'OH massique : t_{OH}, tel que défini ci-après en % p/p par rapport à la masse totale des polyorganosiloxanes hydroxylés obtenus :
∼ 2 ≤ t_{OH} ≤ 20
∼ de préférence 5 ≤ t_{OH} ≤ 15.

Suivant une disposition intéressante de l'invention, les POS α,ω-OH obtenus sont stables dans le temps.

Selon une modalité opératoire avantageuse, il est possible de restreindre le temps de séjour du milieu réactif dans le réacteur à 1 minute ou moins.

Le procédé selon l'invention est également définissable en ce qu'il peut être réalisé en continu, semi-continu ou en discontinu.

Naturellement, le mode continu est particulièrement intéressant sur le plan industriel pour des raisons évidentes d'amélioration de la productivité.

Ainsi, ce mode continu est un mode préféré de mise en oeuvre du procédé selon l'invention, dans lequel intervient, de préférence, une boucle d'hydrolyse.

Dans cette modalité plus spécialement retenue du mode préféré de mise en oeuvre continu faisant intervenir une boucle d'hydrolyse, le soutirage du mélange biphasique phase organique/phase aqueuse est continu. En effet, dans une boucle d'hydrolyse, les volumes réactifs rentrants chassent et remplacent des volumes correspondants de mélange des produits obtenus en fin de réaction. Ce flux est généré par une pompe de circulation incluse dans la boucle, qui comporte également une ou plusieurs entrées de réactifs -en l'occurrence une pour la phase organique (halogénosilanes) et une pour la phase aqueuse (*eau*/*système tampon*)-, ainsi qu'une ou plusieurs sorties pour les produits de réaction en fin de boucle. Pour plus de détails, on peut se référer, par exemple, aux articles suivants :
- O.Bolzern et J.R.bourne, « rapid chemical reactions in a centrifugal pomp », Chem.Eng.Res.Des., vol 63, 1985
- Y.Murakami, T.HIROSE, S.ONO, T.Nishijima, « mixing properties in loop reactor, Journal of Chemical engineering of Japan, vol15, 1982.

Dans ce mode préféré de mise en oeuvre, les moyens d'agitation intensive comprennent avantageusement la pompe de circulation de la boucle d'hydrolyse, qui peut être, par exemple, une pompe par exemple centrifuge.

Toujours selon ce mode préféré de mise en oeuvre du procédé de l'invention, la boucle d'hydrolyse permet le soutirage en continu du mélange biphasique en ayant pris soin de faire en sorte que le temps de séjour des phases organiques aqueuses alimentant le milieu réactionnel soit toujours nettement supérieur au temps de réaction. Or, dans la mesure où cette dernière est instantanée et localisée dans la zone de forte dispersion générée par la pompe de circulation (et dans un éventuel mélangeur statique complémentaire), des temps de séjour de quelques millisecondes à quelques secondes sont, par exemple, apparus comme suffisants.

Pour obtenir les caractéristiques de cisaillement propre à l'invention, il est préférable qu'au moins l'une des sorties des moyens d'alimentation respectifs en phase organique et en phase aqueuse soient disposées le plus près possible des moyens d'agitation intensive, et en particulier au plus de la zone de plus fort cisaillement qu'il génère.

Selon un autre mode de mise en oeuvre du procédé selon l'invention, de type discontinu ("batch"), les modalités suivantes sont retenues :
∼ les moyens d'agitation intensive sont du type de ceux relevant de la technologie "rotor/stator",
∼ il est prévu une alimentation en halogénosilanes (phase organique) et une alimentation en *eau*/*système tampon* (phase aqueuse), ces deux alimentations débouchant dans la zone de turbulence maximale générée par les moyens d'agitation intensive dans le milieu réactionnel,
∼ il est prévu une alimentation en halogénosilanes (phase organique) et une alimentation en *eau*/*système tampon* (phase aqueuse), ces deux alimentations débouchant dans la zone de turbulence maximale générée par les moyens d'agitation intensive dans le milieu réactionnel,
∼ il est également prévu un soutirage séquentiel ou continu du mélange biphasique phase organique/phase aqueuse, généré par les moyens d'agitation intensive, de telle sorte que le temps de séjour soit supérieur ou égal au temps de réaction, de préférence compris entre quelques secondes et quelques minutes.

Dans ce mode "batch", les moyens d'agitation intensifs mis en oeuvre comportent au moins un mélangeur ou un organe de dispersion de type rotor/stator à vitesse variable de rotation. La vitesse variable permet de moduler le cisaillement -et donc la taille des gouttelettes- en fonction du taux d'OH visé dans le polyorganosiloxane.
Cette technologie rotor/stator garantit un fort cisaillement du milieu réactionnel. En pratique, il peut s'agir d'un agitateur du type de celui commercialisé par la société IKA sous la marque ULTRA-TURRAX®. Ce type d'agitateur comprend des éléments rotor/stator constitués par des jeux de cônes à dentures croisées.
Les agitateurs rotor/stator tels que l'ULTRA-TURRAX® permettent de cisailler fortement le milieu réactionnel pour favoriser la formation de très fines gouttelettes (de l'ordre de quelques dizaines de microns). Ce cisaillement est caractérisé par la vitesse périphérique du rotor (équivalent à la vitesse périphérique pour un agitateur conventionnel).
La maîtrise de la qualité du mélange permet de balayer un large spectre de taux d'OH pour le POS hydroxylé visé (entre 1 et 20 % par exemple).

L'une des spécificités de ce mode discontinu du procédé selon l'invention est la disposition de la sortie des moyens d'alimentation respectifs en phase organique et en phase aqueuse, dans l'enceinte réactionnelle, à proximité immédiate de moyens d'agitation intensive (rotor/stator), dans la zone où la turbulence est maximale en cours d'agitation. Cette disposition des sorties de réactifs au plus fort du cisaillement, est avantageusement précise de façon à ce que le mélange phase organique/phase aqueuse s'opère immédiatement après l'entrée desdites phases dans le milieu réactionnel et à ce que la phase organique se trouve mise le plus rapidement possible à l'état dispersé, sous forme de gouttelettes de très petite taille (micromélange).
En d'autres termes, il est préférable que le mélange des deux phases réactives s'effectue au plus près du rotor où la puissance dissipée est la plus forte.

Selon des variantes des modes de mise en oeuvre ci-dessus définis, les moyens d'agitation intensive (ou mélangeurs intensifs) pourraient comprendre un ou plusieurs appareils connus de l'homme du métier et appropriés aux traitement de cisaillement susvisés. Il pourrait s'agir par exemple d'agitateurs à jet d'impact, de micromélangeurs, de mélangeurs statiques, de broyeurs, d'agitateurs à ultrasons ou bien encore de pompes (e.g. centrifuges).
Dans la boucle d'hydrolyse préférée selon l'invention les moyens d'agitation les plus convenables sont par exemple les pompes (e.g. centrifuges) et/ou les mélangeurs de type de ceux à rotor/stator et/ou les mélangeurs statiques.

Le réglage des paramètres du procédé selon l'invention, défini ci-dessus, doit permettre la réalisation des réactions d'hydrolyse/condensation avant que ne se produise une coalescence des gouttelettes de phase dispersée organique. Il est donc très important à cet égard de maximaliser le temps nécessaire à la coalescence en travaillant en milieu très dilué et/ou en ajoutant au moins un tensioactif au mélange. Naturellement, il convient de veiller à ce que les phases puissent toujours être aisément séparées.

Le mélange biphasique phase aqueuse/phase organique ayant réagi et sortant de l'enceinte réactionnelle, est soumis à une séparation, par exemple, par décantation. Toutes les techniques de séparation à la portée de l'homme du métier sont applicables à cette étape éventuelle du procédé selon l'invention. Il peut s'agir par exemple d'une centrifugation et de préférence d'une séparation par gravité.

On peut ensuite procéder, sur la phase organique, à une élimination de composés volatils et des traces d'eau résiduelle, de manière à récupérer une phase organique chargée en polyorganosiloxanes hydroxylés selon de forts taux d'hydroxylation (chaînes courtes). De manière connue en soi, on peut utiliser la distillation (batch ou continu) pour cette étape d'élimination.

Ainsi, grâce au procédé selon l'invention, qui propose la mise en oeuvre d'une agitation à très fort cisaillement permettant la formation de gouttelettes de silane de taille comprise, par exemple, inférieur à 500 µm avec une fraction massique silanes/phase aqueuse comprise e.g. entre 0,05 et 1, et une concentration massique en ≡SiOH avantageusement supérieure ou égale à 10 %, permet de réaliser une synthèse en continu de silicones hydroxylés à taux d'OH variable et parfaitement maîtrisé.

Selon un autre de ses objets, la présente invention concerne un dispositif pour la mise en oeuvre du procédé tel que défini ci-dessus.

Ce dispositif est caractérisé en qu'il comprend essentiellement :
1. au moins un réacteur d'hydrolyse/condensation,
2. des moyens d'agitation intensive équipant le réacteur,
3. des moyens d'alimentation du réacteur en phase organique,
4. des moyens d'alimentation du réacteur en phase aqueuse,
5. des moyens de soutirage du milieu réactionnel biphasique après hydrolyse/condensation,
6. des moyens de maintien de la température du milieu réactionnel dans le réacteur,
7. et un équipement de séparation phase organique/phase aqueuse.

Selon un mode préféré continu de réalisation du dispositif de l'invention :
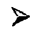 le réacteur d'hydrolyse/condensation est un réacteur-boucle,
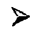 les moyens d'agitation intensive comprennent au moins la pompe de circulation du réacteur-boucle, et éventuellement au moins un autre moyen d'agitation intensive du type de ceux à rotor/stator ou du type mélangeur statique,
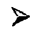 et les moyens de soutirage sont constitués par la sortie de la boucle.

Avantageusement, au moins l'une des sorties d'au moins l'un (de préférence les deux) des moyens d'alimentation 3 et/ou 4 en phase organique et/ou aqueuse, sont disposés de telle sorte que la phase organique et la phase aqueuse soient introduites et/ou se mélangent l'une à l'autre dans la zone d'agitation de la boucle où la puissance dissipée est la plus forte.

Selon un mode alternatif discontinu ("batch") de réalisation du dispositif de l'invention, les moyens d'agitation intensive comportent au moins un ensemble rotor/stator pourvu de cônes à dentures croisées.

Il est également tout à fait opportun, dans ce dispositif "batch", qu'au moins l'une des sorties d'au moins l'un (de préférence les deux) des moyens d'alimentation du réacteur en phase organique et les moyens d'alimentation du réacteur en phase aqueuse comprennent, respectivement les uns et les autres, une sortie disposée au voisinage du rotor/stator des moyens d'agitation de telle sorte que la phase organique et la phase aqueuse soit déversées et/ou se mélangent l'une à l'autre dans la zone où la puissance dissipée est la plus forte.

La présente invention sera mieux comprise à la lumière des exemples qui suivent et qui décrivent :
o un mode continu préféré de mise en oeuvre du procédé d'hydrolyse/condensation de chlorosilanes selon l'invention, à l'aide d'une forme de réalisation préférée d'un dispositif continu de synthèse de POS hydroxylés à fort taux d'hydroxyle,
o et un mode discontinu de mise en oeuvre du procédé d'hydrolyse/condensation de chlorosilanes selon l'invention, à l'aide d'une forme de réalisation alternative d'un dispositif discontinu de synthèse de POS hydroxylés à fort taux d'hydroxyle.

Le dispositif préféré selon l'invention, lequel comprend un réacteur d'hydrolyse/condensation, de type réacteur-boucle et désigné par la référence 1, des moyens d'agitation intensive constitués par la pompe de circulation 2 de la boucle, des moyens d'alimentation 3 en phase organique de la boucle 1, des moyens d'alimentation 4 en phase aqueuse de la boucle 1, une sortie de boucle 5 assimilable au moyen de soutirage du milieu réactionnel biphasique hors de la boucle 1 après hydrolyse/condensation, des moyens 6 de maintien en température inclus dans la boucle 1, ainsi qu'un équipement 7 de séparation phase organique/phase aqueuse.

Le réacteur 1 est donc constitué d'une canalisation en boucle, pourvue d'une isolation thermique (double-enveloppe). Cette canalisation 1 est reliée aux conduites 3 d'entrée de phase organique, 4 d'entrée de phase aqueuse et 5 de sortie du milieu réactionnel en fin de réaction. La circulation du milieu réactionnel dans la boucle 1 est assurée par la pompe de circulation 2 qui est par exemple une pompe centrifuge. L'échangeur de chaleur 6 permet la régulation de la température dans le réacteur-boucle 1.

L'échangeur de chaleur 6 peut être par exemple un bain thermostaté d'un fluide caloporteur (e.g. l'eau) circulant dans la double enveloppe équipant la canalisation constituant la boucle 1. La sortie 5 de milieu réactionnel débouche dans le décanteur 7, constitué par tout équipement approprié et connu de l'homme du métier.

Le réacteur-boucle 1 peut être doté d'un autre moyen d'agitation intensive constituée par exemple par un mélangeur statique intensif, si le cisaillement créé par la pompe 2 n'est pas suffisant.

La pompe de circulation détermine le débit de circulation dans le réacteur-boucle 1. Ce débit peut être par exemple compris entre 20 et 60 m³/h, de préférence compris entre 35 m³/h et 45 m³/h.

La phase organique et la phase aqueuse sont à injecter dans le réacteur-boucle 1 par les entrées 3 et 4 respectivement. Il est à noter que l'entrée 3 en phase organique est disposée au plus près du cisaillement généré par la pompe 2.

Le dispositif mis en oeuvre dans les exemples comprend un réacteur d'hydrolyse/condensation désigné par la référence 1a, des moyens d'agitation intensive désignés par la référence 2a et équipant le réacteur 1a, des moyens d'alimentation 3a du réacteur la en phase organique, des moyens d'alimentation 4a du réacteur 1a en phase aqueuse, des moyens de soutirage 5a du milieu réactionnel biphasique hors du réacteur 1a après hydrolyse/condensation, des moyens 6a de maintien en température du milieu réactionnel 8a contenu dans le réacteur, ainsi qu'un équipement 7a de séparation phase organique /phase aqueuse, ces deux phases étant soutirées par les moyens 5a.

Le réacteur 1a comprend une double enveloppe 9a dans laquelle circule le fluide de maintien en température délivré par d'autres éléments 10a, 11a, 12a constituant les moyens 6a de maintien en température. L'élément 10a est un bain thermostaté d'un fluide caloporteur (par exemple de l'eau), circulant dans la double enveloppe. L'élément 11a des moyens 6a est un organe de réglage de la température de consigne. Cet organe 11a est associé à une sonde 12a de mesure de la température du milieu réactionnel 8a, afin de pouvoir assurer une régulation en continu de la température.

Les moyens d'agitation intensive 2a sont constitués par un mélangeur ULTRA-TURRAX® fabriqué et commercialisé par la société IKA et comportant un bloc moteur 13a à vitesse variable. Ce bloc moteur 13a est relié à un arbre moteur 14a à l'extrémité libre duquel se trouve un ensemble rotor/stator comprenant un jeu de cônes à dentures croisées. L'agitateur ULTRA-TURRAX® 2a est disposé de telle sorte sur la partie supérieure du réacteur la qu'une partie de l'arbre 14a et l'ensemble rotor/stator 15a plongent dans le milieu réactionnel 8a.

Le réacteur la est également équipé dans sa partie inférieure d'un bouchon de vidange 16a.

Les moyens d'alimentation 3a en phase organique comprennent un conteneur 17a empli de phase organique, laquelle est en l'occurrence constituée par du diméthyldichlorosilane (Me₂SiCl₂), e.g. Lesdits moyens 3a comprennent également un conduit d'alimentation 18a permettant l'acheminement de la phase organique (Me₂SiCl₂) du conteneur 17a dans le milieu réactionnel 8a du réacteur 1a, grâce à l'action d'une pompe 19a. La sortie 20a du conduit d'alimentation 19a en phase organique et la sortie 26a du conduit d'alimentation 24a en phase aqueuse, sont disposés au plus près du rotor/stator 15a, de manière à être introduits dans le zone de plus forte turbulence désignée par la référence 21 a.

En outre, il est préférable que les conduits 19a et 24a conçu de façon à ce que les distances entre les sorties 20a et 26a et la zone de plus forte turbulence 21a soient fixes.

Le conteneur 17a de phase organique repose sur une balance 22a permettant de jauger le niveau de liquide à l'intérieur dudit conteneur.

A l'instar des moyens d'alimentation 3a en phase organique, les moyens d'alimentation 4a en phase aqueuse, comprennent un conteneur 23a pour la phase aqueuse (eau/NaOH/H₂CO₃), un conduit d'alimentation 24a équipé d'une pompe 25a qui permet de délivrer la phase aqueuse dans la zone de forte turbulence 21a le milieu réactionnel 8a, par l'embouchure de sortie 26a. Le conteneur de phase aqueuse 23a repose sur une balance 27a permettant de jauger le niveau résiduel de phase aqueuse.

Les moyens de soutirage 5a comportent une canne de soutirage 28a, dont l'extrémité supérieure ouverte 29a affleure le niveau supérieur de milieu réactionnel 8a dans le réacteur la. Cette canne de soutirage 28a est reliée par l'intermédiaire d'un conduit équipé d'une vanne 30a à un équipement 7a, en l'occurrence un conteneur de recueil et de séparation du mélange biphasique phase aqueuse/phase organique ayant réagi par hydrolyse/condensation.

### EXEMPLES

### - I - EXEMPLES réacteur continu - Figure 1

### Exemple 1 :

Les conditions réactionnelles mises en oeuvre sont les suivantes :
- Volume du réacteur = 40 litres;
- Débit de phase organique = 100 kg/h.
- Débit de phase aqueuse = 1000 kg/h.
- T = 40° C.
- P = 1 atm.

Dans le réacteur-boucle de la figure 1, les réactifs suivants sont mis en jeu :
- Phase organique : diméthylchlorosilane.
- Phase aqueuse : solution d'eau à 10 % en soude et 3.3 % en carbonate de sodium.
- Eau d'appoint pour jouer sur la dilution de la phase organique : cette eau est de préférence déminéralisée pour limiter les interactions avec les sels présents dans la phase aqueuse.

L'exemple présente l'impact de la quantité d'eau d'appoint, et donc de la fraction massique en phase organique sur la qualité de l'huile obtenue (en terme de taux d'OH).

**Tableau 1**

| **Essais** | **Débit de phase organique** **(kg/h)** | **Débit de phase aqueuse** **(kg/h)** | **Débit Eau déminéralisée** **(kg/h)** | **Taux d'OH massique** |
|---|---|---|---|---|
| 1.1 | 100 | 575 | 250 | 8.10 |
| 1.2 | 100 | 575 | 330 | 9.00 |
| 1.3 | 100 | 575 | 440 | 10.50 |

### Exemple 2 :

Dans le réacteur-boucle présenté figure 1, un disperseur en ligne de type rotor stator a été rajouté. La phase organique est injectée dans la chambre de mélange du disperseur, zone à puissance dissipée élevée. Des conduites du procédé sont alors réalisées en variant la vitesse de rotation du rotor. Les conditions opératoires correspondent à l'essai 1.3.

**Tableau 2**

| **Essais** | **Vitesse de rotation** | **Taux d'OH massique** |
|---|---|---|
| 1.4 | 2500 | 9.20 |
| 1.5 | 3000 | 10.00 |
| 1.6 | 3500 | 12.90 |

### - II - DISPOSITIF DISCONTINU DE LA FIGURE 1a :

### 1/ Méthodologie générale

### 1.1 - Produits mis en oeuvre :

La phase aqueuse comprend une solution de tampon obtenue à partir de NaOH et de Na₂CO₃ dissous dans de l'eau déminéralisée. Les quantités mises en oeuvre et les conditions opératoires sont données dans le Tableau 3 qui suit.
La phase organique est constituée par du Me₂SiCl₂ fabriqué et commercialisé par RHODIA SILICONES.

### 1.2- Dispositif :

Le dispositif utilisé est celui représenté sur la figure la annexée et décrite ci-dessus.

### 1.3 - Protocole général :

Selon les exemples, la température du thermostat est réglée à 40°C ou à 45°C.
Les conditions d'agitation sont données par la vitesse d'agitation de l'ULTRA TURRAX® en tour/minute. Cette vitesse est variable selon les exemples.
La période de soutirage est déterminée en fonction du temps de séjour.
La séparation s'opère après soutirage du mélange biphasique ayant réagi, dans le décanteur 7.
Le décanteur 7 contient un surnageant 31 constitué par la phase organique siloxanique hydroxylée et un culot 32 constitué par la phase aqueuse chargée du sel de neutralisation et du tampon NaHCO₃/Na₂CO₃.
L'huile qu'on obtient est ensuite analysée par IR-proche et comparée avec un témoin à 10 % (p) en SiOH.

### 2/ Exemples 3 à 9 :

Le tableau suivant résume les conditions opératoires des différents essais, et donne le taux d'OH obtenu.

**Tableau 3**

| | **Exemple 3** | **Exemple 4** | **Exemple 5** | **Exemple 6** | **Exemple 7** | **Exemple 8** | **Exemple 9** |
|---|---|---|---|---|---|---|---|
| Vitesse (N) d'agitation (min⁻¹) | 24000 | 24000 | 9500 | 24000 | 24000 | 20500 | 20500 |
| Me₂SiCl₂ (g/min) | 31,4 | 22,8 | 23 | 25,6 | 25,0 | 22,9 | 22,6 |
| NaOH (g/min) | 19,5 | 16,1 | 16,3 | 16,4 | 15,0 | 16,2 | 16,0 |
| Na₂CO₃ (g/min) | 5,2 | 3,4 | 3,4 | 5,1 | 4,9 | 3,4 | 3,3 |
| Eau (g/min) | 88,4 | 101,5 | 108,3 | 89,5 | 90,0 | 105,4 | 108,5 |
| Tampon (g/min) | 113,0 | 121,0 | 128,0 | 110,9 | 110,0 | 125,0 | 127,8 |
| Débit total (g/min) | 144,4 | 143,8 | 151,0 | 136,5 | 135,0 | 148,0 | 150,4 |
| NaOH/HCl (molaire) | 1,0 | 1,1 | 1,1 | 1,05 | 0,97 | 1,1 | 1,1 |
| Base/HCl (molaire) | 1,1 | 1,2 | 1,2 | 1,15 | 1,09 | 1,2 | 1,2 |
| Temps de séjour (min) | 3,46 | 3,48 | 3,31 | 3,66 | 3,70 | 3,38 | 3,32 |
| Fraction massique en silanes (Xm) (en masse) | 0,22 | 0,16 | 0,15 | 0,19 | 0,185 | 0,155 | 0,15 |
| Taux OH (%) | 9,8 | 12,5 | 5,0 | 11,0 | 10,0 | 8,2 | 9,5 |

Les figures 2 et 3 annexées illustrent les résultats obtenus quant à l'influence respectivement de la fraction massique en silanes Xm et de la vitesse d'agitation N, sur le taux d'OH t_{OH} en % en poids.
Le deuxième paramètre régissant la qualité de l'huile est la vitesse de coalescence. Un fort cisaillement permet de générer des gouttelettes de la phase organique de quelques dizaines de microns : il faut alors réaliser la réaction chimique avant la coalescence des gouttelettes. Il est possible d'augmenter le temps de coalescence en travaillant en milieu plus dilué. Le Tableau 4 présente les résultats d'hydrolyse effectuées avec différentes dilutions de la phase silanes.

### 3/ Exemple 10 :

Le Tableau 4 montre l'influence de la vitesse d'agitation N (et donc du cisaillement) sur la qualité de l'huile obtenue :

**Tableau 4**

| **ESSAIS** | **10.1** | **10.2** | **10.3** | **10.4** |
|---|---|---|---|---|
| **Agitation** rpm | **24000** | **20500** | **13500** | **9500** |
| Température | 40 | 40 | 40 | 40 |
| Me₂SiCl₃ (g/min) | 23 | 23 | 23 | 23 |
| Tampon (g/min) | 127 | 127 | 127 | 127 |
| Total (g/min) | 150 | 150 | 150 | 150 |
| Temps de séjour (min) | 3,33 | 3,33 | 3,33 | 3,33 |
| Fraction massique en silanes Xm | 0,153 | 0,153 | 0,153 | 0,153 |
| % OH | 9 | 8,6 | 7,1 | 3,3 |

## Revendications

1. Procédé d'hydrolyse/condensation, par catalyse acide, de silanes porteurs de groupements hydrolysables -de préférence des halogénosilanes et plus préférentiellement encore des chlorosilanes- dans un milieu réactionnel polyphasique (de préférence biphasique), ce procédé étant du type de ceux consistant à mettre les silanes porteurs de groupements hydrolysables en présence d'eau, due tampon et de neutralisant, sous agitation, puis à séparer la phase aqueuse de la phase organique, laquelle comprend les produits de l'hydrolyse/condensation, à savoir des polyorganosiloxanes hydroxylés;
**caractérisé en ce que :**
-a- on met en oeuvre des moyens d'agitation intensive aptes à produire, dans le milieu réactionnel, une agitation au moins équivalente à celle induite par un cisaillement correspondant à celui fourni par un rotor dont la vitesse périphérique est au moins égale à 8 m.s⁻¹, de préférence à 10 m.s⁻¹, et plus préférentiellement encore comprise entre 15 et 30 m.s⁻¹, et ainsi permettre la formation de gouttelettes de phase organique, de diamètre moyen de Sauter (d₃₂) inférieure à 500µm ;
-b- et on fait en sorte que la fraction massique silanes/phase aqueuse soit supérieure ou égale à 0,05, de préférence supérieure ou égale à 0,10, et plus préférentiellement encore comprise entre 0,5 et 2,0.

2. Procédé selon la revendication 1 **caractérisé en ce que** le neutralisant comprend au moins une base, choisie de préférence parmi celles de formule : ROH avec R représentant une espèce ionique issue d'un élément appartenant à la famille des alcalins - colonne 1A de la classification périodique-, et plus préférentiellement encore dans le groupe comprenant : NaOH, LiOH et CsOH.

3. Procédé selon la revendication 1 ou 2 **caractérisé en ce que** le tampon est à base de carbonates et/ou de phosphates et/ou de borates et/ou de nitrates, ledit tampon se formant, de préférence, in situ dans le milieu réactionnel après introduction dans ce dernier d'au moins un carbonate et/ou un phosphate et/ou un borate et/ou un nitrate, avantageusement un carbonate et/ou un phosphate et/ou un borate et/ou un nitrate de métal alcalin -colonne 1A de la classification périodique-, et plus avantageusement encore un carbonate issu du groupe comprenant: Na₂CO₃, Li₂CO₃ et Cs₂CO₃.

4. Procédé selon la revendication 1 **caractérisé en ce que** l'on fait en sorte que la phase aqueuse ait une concentration saline telle que sa densité soit supérieure à 1.

5. Procédé selon la revendication 1 **caractérisé en ce que** les silanes de départ sont choisis parmi les espèces de formules suivantes :
Monosilanes :
(I) (X)ₐ (R)₄₋ₐ Si
Polysilanes : 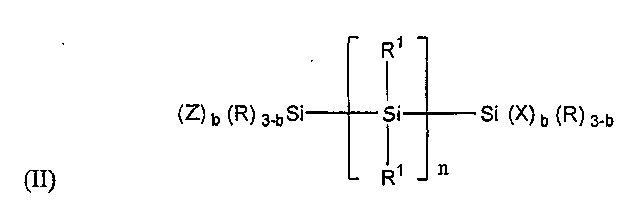 dans lesquelles :
∼ Z représente indépendamment un groupement hydrolysable, de préférence choisi dans le groupe comprenant : les halogènes; les radicaux OR', et OH; les halogènes étant tout spécialement privilégiés ;
∼ R, R¹, R' représente indépendamment un radical alkyle, un cycloalkyle, un aryle, un arylalkyle, un acyle, un alcényle, un alcynyle ;
∼ a, b, n sont des entiers positifs, a = 1-4, b = 1-3, n= 1-100.

6. Procédé selon la revendication 1 **caractérisé en ce que** le milieu réactionnel d'hydrolyse/condensation est maintenu à une température T :
∼ T ≤ 90°C,
∼ de préférence T ≤ 80°C
∼ et plus préférentiellement encore 20°C ≤ T ≤ 60°C.

7. Procédé selon la revendication 1 **caractérisé en ce que** les polyorganosiloxanes hydroxylés obtenus ont un taux d'OH massique : t_{OH}, tel que défini ci-après en % p/p par rapport à la masse totale des polyorganosiloxanes hydroxylés obtenus :
∼ 2 ≤ t_{OH} ≤ 20
∼ de préférence 5 ≤ t_{OH} ≤ 15.

8. Procédé selon la revendication 1 **caractérisé en ce qu'**il est réalisé en continu, semi-continu ou discontinu.

9. Procédé selon la revendication 8 **caractérisé en ce que** :
∼ il est réalisé en continu,
∼ les moyens d'agitation intensive sont du type de ceux relevant de la technologie "rotor/stator",
∼ il est prévu une alimentation en halogénosilanes (phase organique) et une alimentation en eau/ système tampon phase (phase aqueuse), ces deux alimentations débouchant dans la zone de turbulence maximale générée par les moyens d'agitation intensive,
∼ il est prévu également un soutirage séquentiel ou continu du mélange biphasique phase organique/phase aqueuse, généré par les moyens d'agitation intensive, de telle sorte que le temps de séjour soit supérieur ou égal au temps de réaction, de préférence compris entre quelques secondes et quelques minutes.

10. Procédé selon la revendication 8 ou 9 **caractérisé en ce qu'**il est réalisé en continu dans une boucle d'hydrolyse.

11. Dispositif pour la mise en oeuvre du procédé selon l'une quelconque des revendications 1 à 10 **caractérisé en ce qu'**il comprend essentiellement:
1. au moins un réacteur d'hydrolyse/condensation,
2. des moyens d'agitation intensive équipant le réacteur,
3. des moyens d'alimentation du réacteur en phase organique,
4. des moyens d'alimentation du réacteur en phase aqueuse,
5. des moyens de soutirage du milieu réactionnel biphasique après hydrolyse/condensation,
6. des moyens de maintien de la température du milieu réactionnel dans le réacteur,
7. et un équipement de séparation phase organique/phase aqueuse.

12. Dispositif selon la revendication 11 **caractérisé en ce qu'**au moins l'un des moyens d'alimentation du réacteur en phase organique et en phase aqueuse, respectivement, comprend au moins une sortie disposée de telle sorte que la phase organique et la phase aqueuse soit déversées et/ou se mélangent l'une à l'autre dans la zone d'agitation où la puissance dissipée est la plus forte.

13. Dispositif selon la revendication 11 ou 12 **caractérisé en ce que** :
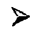 il est du type continu,
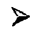 le réacteur d'hydrolyse/condensation est un réacteur-boucle,
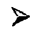 les moyens d'agitation intensive comprennent au moins la pompe de circulation du réacteur-boucle, et éventuellement au moins un autre moyen d'agitation intensive du type de ceux à rotor/stator ou du type mélangeur statique,
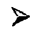 et les moyens de soutirage sont constitués par la sortie de la boucle.

14. Dispositif selon l'une quelconque des revendication 11 à 13 **caractérisé en ce que :**
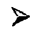 il est du type discontinu ou continu,
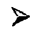 et les moyens d'agitation intensive comportent au moins un ensemble rotor/stator pourvu de cônes à dentures croisées.

## Claims

1. Process for the hydrolysis/condensation, by acid catalysis, of silanes carrying hydrolyzable groups, preferably halosilanes and more preferably still chlorosilanes, in a multiphase reaction medium (preferably a two-phase reaction medium), this process being of the type of those consisting in bringing the silanes carrying hydrolyzable groups into contact with water, buffer and neutralizing agent, with stirring, and in then separating the aqueous phase from the organic phase, which comprises the hydrolysis/condensation products, namely hydroxylated polyorganosiloxanes;
**characterized in that:**
a) use is made of intensive stirring means capable of producing, in the reaction medium, stirring at least equivalent to that induced by a shear corresponding to that provided by a rotor having a peripheral speed at least equal to 8 m.s⁻¹, preferably to 10 m.s⁻¹ and more preferably still of between 15 and 30 m.s⁻¹, and thus of making possible the formation of droplets of organic phase with a Sauter mean diameter (d₃₂) of less than 500 µm;
b) and it is arranged for the silanes/aqueous phase fraction by weight to be greater than or equal to 0.05, preferably greater than or equal to 0.10 and more preferably still of between 0.5 and 2.0.

2. Process according to Claim 1, **characterized in that** the neutralizing agent comprises at least one base preferably chosen from those of formula ROH with R representing an ionic entity resulting from an element belonging to the family of the alkali metals (Group IA of the Periodic Table) and more preferably still from the group consisting of NaOH, LiOH and CsOH.

3. Process according to Claim 1 or 2, **characterized in that** the buffer is based on carbonates and/or on phosphates and/or on borates and/or on nitrates, said buffer preferably being formed in situ in the reaction medium after introduction into the latter of at least one carbonate and/or one phosphate and/or one borate and/or one nitrate, advantageously one alkali metal (Group IA of the Periodic Table) carbonate and/or phosphate and/or borate and/or nitrate and more advantageously still one carbonate resulting from the group consisting of Na₂CO₃, Li₂CO₃ and Cs₂CO₃.

4. Process according to Claim 1, **characterized in that** it is arranged for the aqueous phase to have a saline concentration such that its density is greater than 1.

5. Process according to Claim 1, **characterized in that** the starting silanes are chosen from the entities with the following formulae:
Monosilanes:
(I) (X)ₐ(R)₄₋ₐ Si
Polysilanes: 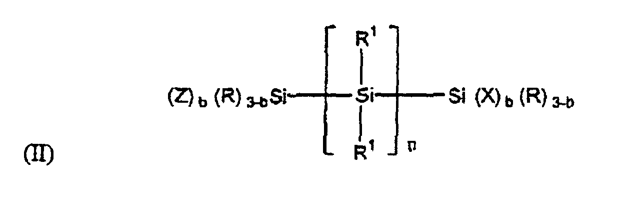 in which:
∼ Z independently represents a hydrolyzable group preferably chosen from the group consisting of halogens, OR' radicals and OH, halogens being very especially favored;
∼ R, R¹ and R' independently represent an alkyl radical, a cycloalkyl, an aryl, an arylalkyl, an acyl, an alkenyl or an alkynyl;
∼ a, b and n are positive integers, a = 1-4, b = 1-3 and n= 1-100.

6. Process according to Claim 1, **characterized in that** the hydrolysis/condensation reaction medium is maintained at a temperature T:
∼ T ≤ 90°C,
∼ preferably T ≤ 80°C,
∼ and, more preferably still, 20°C ≤ T ≤ 60°C.

7. Process according to Claim 1, **characterized in that** the hydroxylated polyorganosiloxanes obtained have a level of OH by weight, t_{OH}, as defined below, as % w/w with respect to the total weight of the hydroxylated polyorganosiloxanes obtained:
∼ 2 ≤ t_{OH} ≤ 20
∼ preferably, 5 ≤ t_{OH} ≤ 15.

8. Process according to Claim 1, **characterized in that** it is carried out continuously, semicontinuously or batchwise.

9. Process according to Claim 8, **characterized in that:**
∼ it is carried out continuously,
∼ the intensive stirring means are of the type of those coming under "rotor/stator" technology,
∼ provision is made for a feed of halosilanes (organic phase) and a feed of water/buffer system (aqueous phase), these two feeds emerging in the region of maximum turbulence generated by the intensive stirring means,
∼ provision is also made for sequential or continuous withdrawal of the two-phase organic phase/aqueous phase mixture generated by the intensive stirring means, so that the residence time is greater than or equal to the reaction time, preferably of between a few seconds and a few minutes.

10. Process according to Claim 8 or 9, **characterized in that** it is carried out continuously in a hydrolysis loop.

11. Device for the implementation of the process according to any one of Claims 1 to 10, **characterized in that** it essentially comprises:
1. at least one hydrolysis/condensation reactor,
2. intensive stirring means equipping the reactor,
3. means for feeding the reactor with organic phase,
4. means for feeding the reactor with aqueous phase,
5. means for withdrawing the two-phase reaction medium after hydrolysis/condensation,
6. means for maintaining the temperature of the reaction medium in the reactor,
7. and an organic phase/aqueous phase separation device.

12. Device according to Claim 11, **characterized in that** at least one of the means for feeding the reactor with organic phase and with aqueous phase, respectively, comprises at least one outlet positioned such that the organic phase and the aqueous phase flow into and/or are mixed with one another in the stirring region where the power dissipated is at its strongest.

13. Device according to Claim 11 or 12, **characterized in that:**
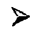 it is of the continuous type,
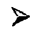 the hydrolysis/condensation reactor is a loop reactor,
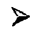 the intensive stirring means comprises at least the circulation pump of the loop reactor and optionally at least one other intensive stirring means of the type of those with a rotor/stator or of the static mixer type,
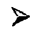 and the withdrawal means are composed of the outlet of the loop.

14. Device according to any one of Claims 11 to 13, **characterized in that:**
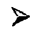 it is of the batchwise or continuous type,
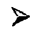 and the intensive stirring means comprise at least one rotor/stator combination provided with conically-shaped parts with interlocking teeth.

## Patentansprüche

1. Verfahren zur Hydrolyse/Kondensation durch Säure-Katalyse von Silanen, die hydrolysierbare Gruppierungen tragen - vorzugsweise Halogensilane und noch stärker bevorzugt Chlorsilane - in einem mehrphasigen (vorzugsweise zweiphasigen) Reaktionsmedium, wobei dieses Verfahren vom Typ derjenigen Verfahren ist, die darin bestehen, die Silane, die hydrolysierbare Gruppierungen tragen, in Gegenwart von Wasser, Puffer und Neutralisationsmittel unter Rühren in Kontakt zu bringen, anschließend die wässrige Phase von der organischen Phase abzutrennen, die die Produkte der Hydrolyse/Kondensation einschließt, nämlich hydroxylierte Polyorganosiloxane;
**dadurch gekennzeichnet dass:**
-a- Mittel zum intensiven Rühren eingesetzt werden, die dazu geeignet sind, in dem Reaktionsmedium eine Bewegung hervorzurufen, die mindenstens derjenigen entspricht, die durch eine Scherkraft induziert wird, die derjenigen entspricht, die von einem Rotor geliefert wird, dessen Umfangsgeschwindigkeit mindestens 8 m.s⁻¹, vorzugsweise 10 m.s⁻¹ und noch stärker bevorzugt 15 bis 30 m.s⁻¹ beträgt, und die so die Bildung von Tröpfchen von organischer Phase eines mittleren Sauter-Durchmessers (d₃₂) von kleiner als 500 µm ermöglichen;
-b- so dass die Massefraktion Silane/wässrige Phase größer oder gleich 0,05 vorzugsweise größer oder gleich 0,10 und noch stärker bevorzugt 0,5 bis 2,0 ist.

2. Verfahren gemäß Anspruch 1, **dadurch gekennzeichnet dass** das Neutralisationsmittel mindestens eine Base einschließt, vorzugsweise aus denjenigen der folgenden Formel ausgewählt ist: ROH, wobei R eine ionische Spezies repräsentiert, die sich von einem Element ableitet, das der Familie der Alkalien angehört - Vertikalreihe 1A des Periodensystems - und noch stärker bevorzugt in der Gruppe, die folgendes einschließt: NaOH, LiOH, CsOH.

3. Verfahren nach Anspruch 1 oder 2, **dadurch gekennzeichnet dass** der Puffer auf der Basis von Carbonaten und/oder Phosphaten und/oder Boraten und/oder Nitraten ist, wobei der Puffer sich, vorzugsweise, in situ in dem Reaktionsmedium nach dem Einbringen in letzteres von mindestens einem Carbonat und/oder einem Phosphat und/oder einem Borat und/oder einem Nitrat, zweckmäßigerweise von einem Carbonat und/oder einem Phosphat und/oder einem Borat und/oder einem Nitrat von Alkalimetall - Vertikalreihe 1 A des Periodensystems - und noch zweckmäßiger von einem Carbonat, das der Gruppe entstammt, die folgendes einschließt: Na₂CO₃, Li₂CO₃ und Cs₂CO₃, bildet.

4. Verfahren nach Anspruch 1, **dadurch gekennzeichnet dass** die wässrige Phase eine solche Salz-Konzentration aufweist, dass ihre Dichte größer als 1 ist.

5. Verfahren nach Anspruch 1, **dadurch gekennzeichnet dass** die Ausgangssilane aus den Spezies der folgenden Formeln ausgewählt sind:
Monosilane:
(I) (X)ₐ(R)₄₋ₐSi
Polysilane: 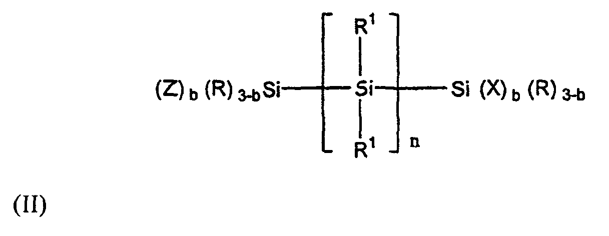 wobei:
- Z unabhängig eine hydrolysierbare Gruppierung repräsentiert, die vorzugsweise aus der Gruppe ausgewählt ist, die folgendes einschließt: Halogene, Reste OR' und OH; wobei die Halogene ganz besonders privilegiert sind;
- R, R¹, R' unabhängig einen Alkylrest, einen Cycloalkylrest, einen Arylrest, einen Arylalkylrest, einen Acylrest, einen Alkenylrest, einen Alkinylrest repräsentieren;
- a, b, n ganze positive Zahlen sind, a = 1-4, b = 1-3, n = 1-100.

6. Verfahren nach Anspruch 1, **dadurch gekennzeichnet dass** das Reaktionsmedium von Hydrolyse/Kondensation bei einer Temperatur T gehalten wird:
- T ≤ 90 ° C
- vorzugsweise T ≤ 80 ° C
- und noch stärker bevorzugt 20 °C ≤ T ≤ 60 °C.

7. Verfahren nach Anspruch 1, **dadurch gekennzeichnet dass** die erhaltenen hydroxylierten Polyorganosiloxane einen Massegehalt an OH t_{OH}, wie nachstehend definiert, in % p/p bezüglich der Gesamtmasse der erhaltenen hydroxylierten Polyorganosiloxane, aufweisen:
- 2 ≤ t_{OH} ≤ 20
- vorzugsweise 5 ≤ t_{OH} ≤ 15.

8. Verfahren nach Anspruch 1, **dadurch gekennzeichnet dass** es kontinuierlich, halbkontinuierlich oder diskontinuierlich realisiert wird.

9. Verfahren nach Anspruch 8, **dadurch gekennzeichnet dass:**
- es kontinuierlich realisiert wird,
- die Mittel des intensiven Rührens von dem Typ derjenigen sind, die für die "Rotor/Stator"-Technik von Bedeutung sind,
- eine Zufuhr an Halogensilanen (organische Phase) und eine Zufuhr an Wasser/System Pufferphase (wässrige Phase) vorgesehen ist, wobei diese beiden Zuführungen in die Zone maximaler Turbulenz einmünden, die durch die Mittel des intensiven Rührens erzeugt wird,
- auch ein sequenzielles oder kontinuierliches Abzapfen des Zweiphasengemisches organische Phase/wässrige Phase vorgesehen ist, das durch die Mittel des intensiven Rührens erzeugt wird, derart, dass die Verweilzeit größer oder gleich der Reaktionszeit, vorzugsweise einige Sekunden bis einige Minuten, ist.

10. Verfahren nach Anspruch 8 oder 9, **dadurch gekennzeichnet dass** es kontinuierlich in einen Hydrolysekreislauf realisiert wird.

11. Vorrichtung zur Durchführung des Verfahrens nach einem der Ansprüche 1 bis 10, **dadurch gekennzeichnet dass** sie im Wesentlichen folgendes einschließt:
1. mindestens einen Hydrolyse/Kondensationsreaktor
2. Mittel zum intensiven Rühren, mit denen der Reaktor ausgerüstet ist,
3. Zufuhrmittel des Reaktors zur organischen Phase,
4. Zufuhrmittel des Reaktors zur wässrigen Phase
5. Mittel zum Abzapfen des zweiphasigen Reaktionsmediums nach Hydrolyse/Kondensation
6. Mittel zum Aufrechterhalten der Temperatur des Reaktionsmediums in dem Reaktor
7. und eine Ausrüstung zum Trennen von organische Phase/wässrige Phase.

12. Vorrichtung nach Anspruch 11, **dadurch gekennzeichnet dass** mindestens eines der Zufuhrmittel des Reaktors zur organischen Phase bzw. zur wässrigen Phase mindestens einen Ausgang beinhaltet, der so angeordnet ist, dass die organischen Phase und die wässrige Phase gekippt werden und/oder sich miteinander in der Rührzone vermischen, wo die Verlustleistung am größten ist.

13. Vorrichtung nach Anspruch 11 oder 12, **dadurch gekennzeichnet dass**
- sie vom kontinuierlichen Typ ist,
- der Hydrolyse/Kondensationsreaktor ein Schleifenreaktor ist,
- die Mittel des intensiven Rührens mindestens die Zirkulationspumpe des Schleifenreaktors und gegebenenfalls mindestens ein anderes Mittel für intensives Rühren des Typs von denjenigen mit Rotor/Stator oder des Typ eines statischen Mischers beinhalten,
- und die Abzapfmittel durch den Ausgang des Kreislaufs aufgebaut werden.

14. Vorrichtung nach einem der Ansprüche 11 bis 13, **dadurch gekennzeichnet dass**
- sie vom diskontinuierlichen oder kontinuierlichen Typ ist,
- und die Mittel des intensiven Rührens mindestens ein Ensemble von Rotor/Stator beinhalten, das mit Kegeln mit gekreuzten Verzahnungen versehen ist.
